# EUROPEAN PATENT APPLICATION

(11) **EP 2 605 357 A1**
(43) Date of publication of application: **19.06.2013**
(21) Application number: 11193820.5
(22) Date of filing: 15.12.2011
(51) Int. Cl.: H02J 3/16, H02J 3/18

(54) **Control of reactive power output from a wind park**

(71) Applicant: Siemens Aktiengesellschaft, 80333 München (DE)
(72) Inventor: Kumar, Sathees, 7400 Herning (DK); Quottrup, Michael, Dr., 8940 Randers SV (DK); Stoettrup, Michael, 7400 Herning (DK)

(57) **Abstract**

A method of controlling the dynamic power factor or the re-active power output of a wind park to a utility grid which is to be driven with a requested power factor, a requested voltage or a requested reactive power is provided. The wind park comprises reactor means (83) for providing a selectable shunt capacitance in accordance with a capacitor selection signal and is executed by a wind park controller (43). The method includes:
a) determining a set point for the wind turbines (1, 3) for setting a reactive power output of the wind turbines (1, 3);
b) transmitting the set point to the wind turbines (1, 3);
c) comparing the determined set point to a first threshold set point; and
d) adjusting the capacitor selection signal in accordance with a result of the comparison.

## Description

The present invention relates to a method of controlling the dynamic power factor or the reactive power output of a wind park to a utility grid which is to be driven with a requested power factor, a requested voltage or a requested reactive power.

Over the last decade the fraction of energy added to utility grids by wind parks has increased significantly. Therefore, there is also an increased need for controlling wind parks delivering energy to utility grids with respect to a number of parameters which are important for the utility grid to work faultlessly. In addition to the voltage and the frequency of the power delivered to the utility grid, it may also be important to provide, on request of the utility system operator, a certain reactive power or a certain power factor. The reactive power is the power needed by inductive and capacitive users to build up their magnetic and electric fields, respectively. With an alternating current such magnetic and electric fields will be built up and down periodically, which leads to a reactive power flow from and to the electric generators.

The power factor is the ratio of the active power over the apparent power. The apparent power is the square root of the square of the active power plus the square of the reactive. A power factor of one means that no reactive power is present and the supplied power contains only active power and corresponds to a phase difference between the voltage and the current of zero degrees, since the power factor is given by the cosine of the phase angle between the voltage and the current. On the other hand, a phase difference of 90°, i.e. a power factor of zero, means that only reactive power is present.

Variations in the demand for reactive power in the utility grid need to be compensated through reactive power provided by the power generators. As long as the power delivered to the utility grids by wind parks was only a minor fraction of the total power delivered to the grids, there was no need for the wind parks to react to the reactive power demands or power factor demands of the grid. However, with the always increasing fraction of power fed into utility grids by wind parks, the dynamic power factor control or a dynamic reactive power control of wind parks becomes more and more important.

Dynamic power factor control of wind parks is often implemented with capacitor banks mounted in individual wind turbines. A varying number of capacitors are selectively connected to the grid to provide such reactive power as is required to meet the specified power factor. Dynamic power factor control may also be implemented by an arrangement where the individual wind turbines are equipped with a power electronic converter that converts part or whole of the electricity supplied by the wind turbine. The power electronic converter of the individual wind turbine is programmed to control the power factor of the electricity supplied by the wind turbine. E.g., if the wind turbine is equipped with a transformer for transforming the voltage output of the converter to a medium voltage on a bus connecting the wind turbines of the wind park, the reactive power output from the wind turbine can be controlled by setting a voltage set point of the converter connected to the primary side of the transformer.

For these types of power factor control system the desired power factor is typically provided as a signal from a central SCADA (Supervise Control and Data Acquisition) system. This SCADA system is also referred to as the wind park controller. The utility system operator dispatches a request to the wind park for a certain power factor and the central SCADA system sends set points in accordance with the power factor request to the individual wind turbines to compensate for the power factor contribution of the wind park electrical infrastructure. Such an arrangement for dynamic power control is, e.g., described in US 5,083,039, which describes a wind turbine with dynamic power factor control and sending control signals to power electronic converters of wind turbines. The power electronic converters are then locally controlled such that the power factor delivered by the local wind turbine is shifted through changing the ratio of active and reactive current supplied to the grid by the converter module of the power electronic converter.

Unless all turbines are operating at the same active power output, which will rarely be the case if the wind speed is not sufficiently high to cause all wind turbines of the farm to operate at rated capacity, the reactive power supplied by an individual wind turbine will change proportionally with the active power supplied by the individual wind turbine. This means that some wind turbines will provide significantly larger proportion of reactive power than others, which in turn leads to current flow within the wind park that is less balanced and causes higher losses than what could be achieved with more balanced current flow.

The invention is based on the insight that the amount of re-active power that can be provided by an individual wind turbine may prove insufficient for grid demands considering the growing fraction of power provided by wind farms. The inventors therefore contemplate the use of additional reactor means connected to a common connection point of the wind turbines of a wind park which may provide for additional reactive power but may also counter the control of reactive power from the wind turbines.

For this reason it is an object of the present invention to provide a method of controlling the dynamic power factor or the reactive power output of a wind park which comprises reactor means connected to a common connections point of the wind park's wind turbines.

Accordingly, a first aspect of the invention provides a method of controlling the dynamic power factor or the re-active power output of a wind park to a utility grid which is to be driven with a requested power factor, a requested voltage or a requested reactive power, the wind park comprising a plurality of wind turbines and reactor means connected to a common connection point of the wind turbines and adapted to provide a selectable shunt capacitance in accordance with a capacitor selection signal. The method is executed by a wind park controller of the wind park and includes:
a) determining a set point for the wind turbines in accordance with a requested power factor, a requested voltage or a requested reactive power, wherein the set point may be a power factor set point or a voltage set point for setting a re-active power output of the wind turbines; and
b) transmitting the set point to the wind turbines.

According to the invention the method further includes:
c) comparing the determined set point to a first threshold set point; and
d) adjusting the capacitor selection signal in accordance with a result of the comparison.

The invention has the advantage that the set points for the individual wind turbines and the capacitor selection signal for the reactor means are determined by one and the same instance, the wind park controller. Since the capacitor selection signal is adjusted based on an assessment of the wind turbines' set points, it is not possible that the setting of the capacitor selection signal and hence the shunt capacitance provided by the reactor means counteract the provision of reactive power from the wind turbines. Accordingly the invention provides a way of integrating reactor means at a common connection point of the wind park (e.g. a primary or secondary side of a park transformer connecting the wind park to the utility grid) without the risk of increasing currents within the wind park. In addition the invention avoids saturation of the wind turbines' capability of providing reactive power by adjusting the capacitor selection signal in such a way that the set points for the wind turbines remain below a threshold set point. This is advantageous because the wind turbines can reserve some control headroom for reacting to changes of the states of the individual wind turbines. As has already been mentioned above, the output of reactive power from an individual wind turbine will vary with the total wind power harvested by the wind turbine. If the wind turbine can still react to momentary changes because the wind turbine's converter is not yet saturated, the currents within the wind park can be balanced better.

The reactive power output of the wind turbines can generally be controlled using power factor set points or voltage set points. Both types of set points essentially express the same and can be mathematically transformed into each other. Hence, both types of set points are considered to be equivalent within the scope of this document.

The reactor means can include a capacitor bank and/or a dynamic VAr compensator. A capacitor bank will usually be switched increasing the total capacitance in a stepwise manner while dynamic VAr compensators allow for continuous selection of a resultant total capacitance.

Preferably determining the set point is carried out in accordance with a current state of the capacitor selection signal.

In preferred embodiments of the inventive method step c) further includes:
cc) comparing the determined set point to a second threshold set point.

In this way the set points of the wind turbines can be checked for compliance with upper and lower boundaries and the capacitor selection signal can be adjusted when the set points are out of bounds in order to make the set points return to the desired interval.

Accordingly the first threshold set point may be an upper threshold set point and the second set point may be a lower threshold set point. Then, the capacitor selection signal is adjusted when the determined set point exceeds the first threshold set point or is lower than the second set point.

The comparison in step c) may be carried out repetitively or continuously. In one embodiment of the inventive method the capacitor selection signal is only adjusted if the result of the comparison has been constant during a first predetermined time period. Generally, the reaction caused by changing the shunt capacitance exhibited by the reactor means will cause a disturbance within the wind park. The wind park controller will notice this disturbance in the acquired data (e.g. voltage, current and phase) and change the set points for the wind turbines accordingly. In such an arrangement the shunt capacitance selected via the capacitor selection signal can be seen as coarse tuning means while the set points for the wind turbines represent fine tuning means of the total provided reactive power. Accordingly it may be advantageous to set a relatively large control constant for the control of the reactor means. If the capacitor selection signal is only adjusted in cases where the result of the comparison has been constant during the first predetermined time period, too fast switching of the reactor means may be avoided for cases where the set points are out of bounds for only a short period of time.

In one such embodiment including upper and lower threshold set points, the capacitor selection signal is adjusted if the determined set point has exceeded the upper threshold set point during a second predetermined time period or has been lower than the lower threshold set point during a third predetermined time period. In more detail, the second predetermined time period may be different from the third predetermined time period. This embodiments accounts for different system responses caused by engaging and disengaging additional capacitors in a capacitor bank, respectively.

The capacitor selection signal is preferably held constant during a fourth predetermined time period after the capacitor selection signal has been adjusted. In other words, the adjusting of the capacitor selection signal is carried out at the earliest after a predetermined time period has expired since the last adjusting action. This allows for adequate damping of voltage transients caused by the change of the shunt capacitance. A suitable time period may be in therange of several seconds up to several minutes, e.g. 10 minutes.

Adjusting the capacitor selection signal may include either incrementing or decrementing the selectable shunt capacitance by a predetermined step capacitance. In such an embodiment control of the reactive power will operate in an incremental manner which may be relatively slow but provides good control stability.

Alternatively step c) may include comparing the determined set point to a plurality of first threshold set points. Then the capacitor selection signal is adjusted in accordance with a first number of first threshold set points that are lower than the determined set point and a second number of first threshold set points that are greater than the determined set point. In this way it becomes possible to increase the total shunt capacitance exhibited by the reactor means by a larger degree if the determined set point exceeds two first threshold set points than if the determined set point exceeds only one of the two first threshold set points. This provides for a faster control mechanism and is especially useful if the reactor means comprise dynamic VAr compensators.

A second aspect of the invention provides a data storage medium comprising program code which carries out the method of the first inventive aspect when executed on a wind park controller of a wind park comprising a plurality of wind turbines and reactor means connected to a common connection point of the wind turbines and adapted to provide a selectable shunt capacitance in accordance with a capacitor selection signal.

The invention will now be described and further illustrated referring to figures showing preferred embodiments of the invention. Like reference numerals designate the same or similar items throughout the figures.
Fig. 1 shows a wind farm arrangement for carrying out the control of reactive power output according to the present invention.
Fig. 2 shows a flow-chart of an embodiment of the inventive control method.
Fig. 3 shows waveforms of a first transient simulation of a wind park controlled by the inventive method.
Fig. 4 shows waveforms of a second transient simulation of a wind park controlled by the inventive method.
Fig. 5 shows a diagram illustrating thresholds for engaging and disengaging capacitors of the capacitor bank.
Fig. 6 (split into two Figs. 6A and 6B for formality reasons) shows waveforms of a third transient simulation of a wind park controlled by the inventive method employing the thresholds of Fig. 5.

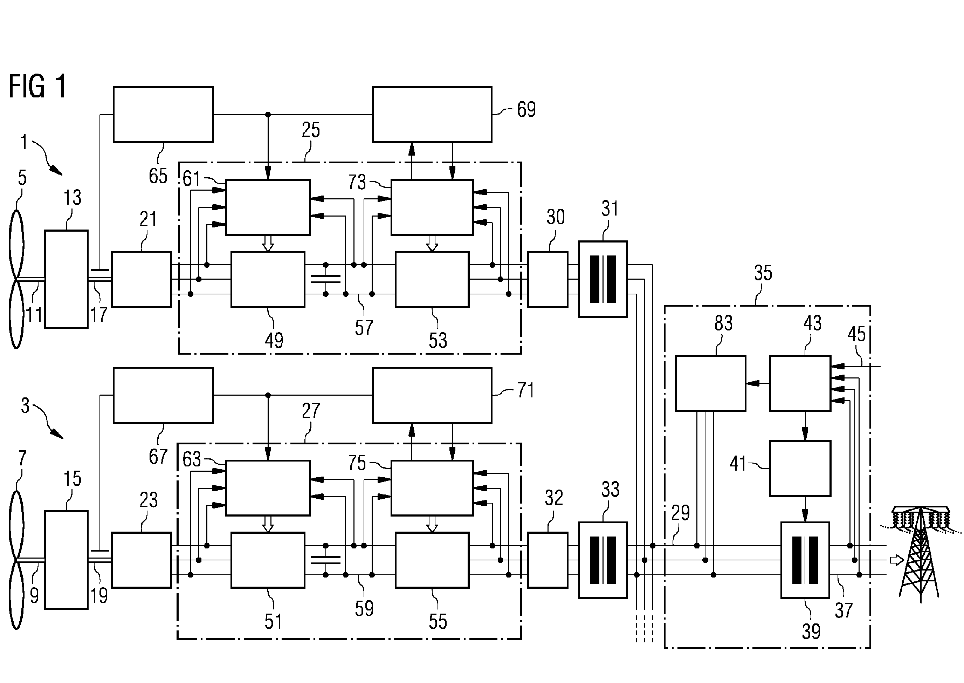

Fig. 1 shows a wind farm arrangement for carrying out the control of reactive power output according to the present invention. The wind farm is indicated by two wind turbines 1, 3, each comprising a rotor with a rotor shaft transmitting the rotational momentum of the turning rotor 5, 7 to a gear box 13, 15. In the gear box 13, 15, a transmission of the rotation to an output shaft 17, 19 with a certain transmission ratio takes place. In some embodiments of the invention the gear boxes 13, 15 may be omitted.

The output shaft 17, 19 is fixed to the rotor of an AC generator 21, 23 which transforms the mechanical power provided by the rotation of the output shaft 17, 19 into electrical power. The AC generator may either be a synchronous generator or an asynchronous generator. In a synchronous generator, the rotor rotates with the same rotational frequency as a rotating magnetic field produced by a stator of the generator. In contrast, in an asynchronous generator, the rotational frequencies of the stator's magnetic field and the rotor are different. The difference in rotational frequency is described by the slip of the generator. The generators 21, 23 are variable speed generators, i.e. the rotational speed of the rotor is allowed to vary depending on the wind conditions.

To provide a fixed frequency for the utility grid to which the wind turbines are connected, each wind turbine 1, 3 is equipped with a power electronic converter 25, 27 which converts parts or the whole of the varying frequency electricity delivered by the generators 21, 23 into an electrical power having a fixed frequency which is adapted to the utility grid. In addition, the power electronic converters 25, 27 control the output voltage of the electricity supplied by the wind turbine to correspond to a specific voltage set point. Detailed description of the internal constitution of the power electric converters 25, 27 will be omitted here for the sake of conciseness as that is well-known in the art.

The individual wind turbines 1, 3 are connected to an internal grid 29 carrying an intermediate voltage through filters 30, 32 and transformers 31, 33. The internal grid 29 is connected, via a substation 35, to a utility grid which is to be operated with a certain power factor or reactive power requested by the utility system operator. The control of the wind park is carried out by a wind park controller 43 which receives the request for reactive power from the utility system operator. The wind farm, which is schematically shown in Fig. 1, is to be operated with the requested power factor or requested reactive power.

With the inventive wind farm and the inventive method the power factor supplied to utility grid can be controlled at the sub station level by a combination of a voltage or power factor control of the individual wind turbines of the wind farm, reactor means such as a capacitor bank or dynamic VAr compensators and, as an option, voltage control at the substation. The wind park controller 43 therefore determines set points (either voltage set points or power factor set points) for the wind turbines 1, 3 and transmits the set points to the individual wind turbines 1, 3.

The power factor of the electricity supplied by the wind farm can be regulated to match the power factor requested by the utility system operator by controlling the reactive power output from the individual converters, i.e. from the individual wind turbines.

When the utility system operator dispatches a request to the wind farm for a certain power factor the wind farm power factor is measured at the substation level and compared with the power factor requested by the utility system operator. Then, the ratio of the wind farm voltage, at the sub station's 35 output 37, to the utility grid voltage is adjusted at the sub station 35 level. This change of the ratio of the wind farm voltage to the utility grid voltage causes a change of the output voltage at the individual wind turbines. Therefore, the output voltage at the individual wind turbines is regulated by the power electronic converters 25, 27 to correspond again to the specific voltage set point. The adjustment of the ratio of the wind farm voltage to the utility grid voltage and the regulation of the individual wind turbines output voltages so as to correspond to the specific voltage set point is continued until the power factor of the electricity supplied by the wind farm corresponds to the power factor requested to the utility system operator.

The wind farm voltage can be stepped up to the utility grid voltage by means of a main transformer 39 of the substation 35. For reactive power control the substation 35 may comprise a tap changer 41 controlled by the wind park controller 43. The tap changer 41 allows for changing the ratio of the turns of the main transformers windings.

Since the utility grid voltage at the secondary side of the main transformer 39 is fixed by the utility grid, changing the voltage at its primary side to a value that deviates from the ratio of the main transformer's windings leads to a current across the transformer which results in a corresponding phase angle between output voltage and output current. Accordingly, the total reactive power can be controlled by setting a voltage at the primary side of the main transformer and/or by changing a tap setting of the main transformer.

Accordingly, each wind turbine or converter of a wind turbine can deliver a certain amount of reactive power. However, this source of reactive power will reach a point of saturation because the voltage output from the converters 73, 75 can only be varied within certain limits. Thus, additional means for providing reactive power are desirable in order to be able to provide even more reactive power. For this reason the wind park of the invention comprises reactor means 83 connected to a common connection point of the wind turbines 1, 3. This common connection point can e.g. be directly connected to the primary or secondary side of the main transformer 39. The reactor means 83 may include a capacitor bank and/or dynamic VAr compensators.

The wind farm of Fig. 1 has been described on the basis of receiving a power factor request from the input line 45. However, the wind park controller could be adapted to receive a reactive power request through the input line 45 and control the reactive power output in accordance with this reactive power request.

Although only two wind turbines are shown in Fig. 1, the wind farm would typically include a larger number of wind turbines, with each of wind turbine including a power electronic converter for converting variable frequency electricity generated by the wind turbine generator into fixed frequency electricity.

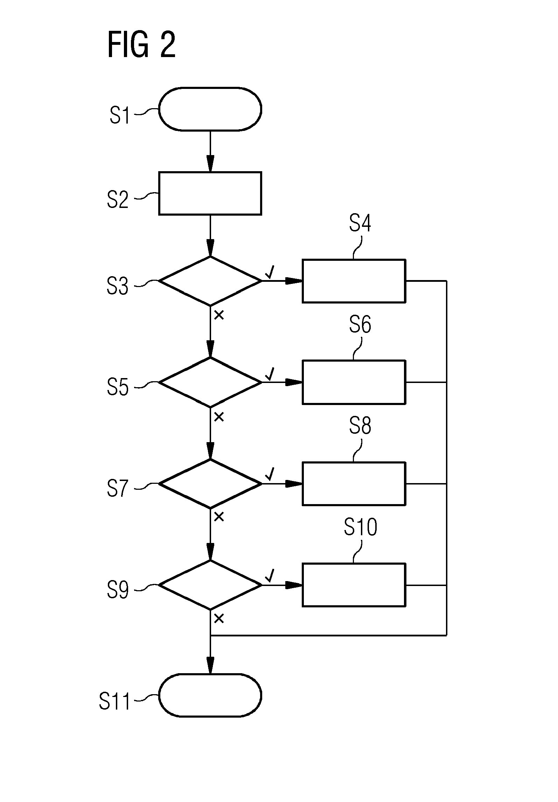

Fig. 2 shows a flow-chart of an embodiment of the inventive control method. The control method as shown in Fig. 2 may be invoked repeatedly and then starts at a step S1. In a subsequent step S2 a timer is incremented. This step can also be carried out at a different place within the flow-chart, e.g. before an end step S11. In step S3 the determined set point will be compared to a first threshold set point which may be an upper set point. In this case it will be checked whether the determined set point exceeds the threshold set point. In addition it may be checked in step S3 whether the data acquired from the point of common coupling (PCC) where the wind park connects to the utility grid meet predetermined conditions. In addition it will be checked whether the timer value is greater than a predetermined first value. If the checks of step S3 are in the affirmative, the procedure continues with step S4 where the shunt capacitance is increased, e.g. by engaging an additional capacitor or capacitor bank. In addition the timer will be reset in step S4.

If the result of one of the checks in S3 is negative, the procedure continues with step S5 where the determined set point is checked against a second threshold set point, e.g. a lower threshold set point. In addition it will be checked whether the timer exceeds the first value. Again any acquired data on a currents status at the PCC may optionally be evaluated. If the determined set point is lower than the threshold set point and the timer has exceeded the predetermined second timer value, the shunt capacitance may be decreased in step S6 where the timer will be reset. As would be readily apparent to a skilled person, the order of steps S3 and S5 may be changed as is also the case for the steps S7 and S9 explained below. In addition the flow-chart may be adapted to only check the timer once for both steps S3 and S5 as is also the case for steps S7 and S9.

In steps S7 and S9 the determined set point may be checked against second upper or lower boundaries which can be the same as the upper or lower boundaries checked steps S3 or S5. However, preferably the second upper or lower boundaries are different from those of steps S3 and S5. In addition, the timer will be checked for a second value. The shunt capacitance will be changed accordingly in steps S8 and S10, respectively, if the checks are positive, and the timer will be reset.

The change of the shunt capacitance may be different in steps S8 and S10 as compared to that of steps S4 and S6 in order to accommodate for different upper and lower boundaries checked in steps S7 and S9.

The procedure terminates in step S11.

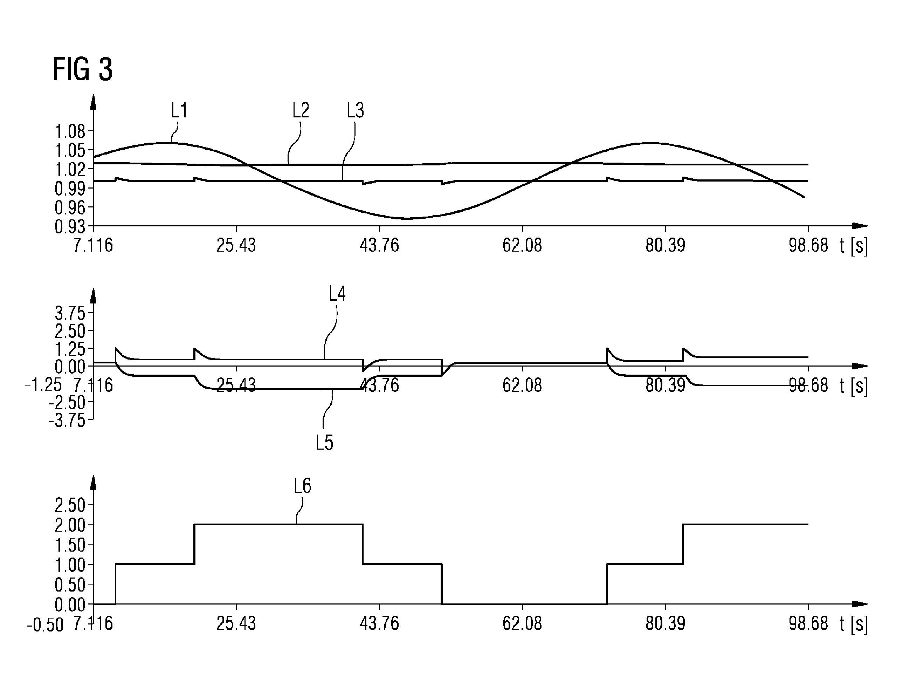

Fig. 3 shows waveforms of a first transient simulation of a wind park controlled by the inventive method. Fig. 3 illustrates a voltage mode of operation. Accordingly the first subdiagram shows a curve L1 which represents the voltage set point requested by the utility system operator. Waveform L2 shows the set points determined by the wind park controller for operating the wind park which are transmitted to the wind turbines. L3 is the voltage measured at the point of common coupling. All waveforms in the first subdiagram are given as p.u., i.e. per-unit.

Waveform L6 in the third subdiagram shows the number of capacitors in service which varies for the given example between 0 and 2 following the input values of L1. A single capacitor of the capacitor bank may e.g. have a capacitor size sufficient for providing 1 MVAr of reactive power.

The second subdiagram shows waveforms L4 and L5 for the total reactive power at the primary side of the main transformer and the reactive power provided by the wind turbines, respectively. The reactive powers are given in MVAr.

An open-loop simulation was made. The requested set point for the wind park is used as an input value to determine whether the shunt capacitance should be increased or decreased. The input value is slowly varied between 0.94 and 1.06 p.u. voltage. It is observed that the number of capacitor banks switched in is initially zero. Once the voltage set point L1 goes above 1.05 p.u., the first capacitor is switched in. As the requested set point stays above the upper boundary of 1.05 p.u. for more than 10 s, the second capacitor is engaged. When the requested set point drops below 0.95 p.u., a capacitor bank is disengaged and as it remains below 0.95 p.u. for more than 10 s, the second capacitor is disengaged resulting in no reactive power contribution from the reactor means.

Each capacitor switching operation is seen as a disturbance and hence the wind park controller reduces the voltage set points L2 for the wind turbines in order to reduce the reactive power production. In addition the measured voltage at the point of common coupling rises (L3) when a capacitor is switched in which is another reason for the wind park controller to reduce the set point for the wind turbines.

The waveforms in the second subdiagram show that the sum of reactive power from the wind turbines (L5) decreases when the reactor means inject reactive power into the utility grid. Hence, saturation of the wind turbines' capability of delivering reactive power is avoided because the reactor means are able to deliver additional reactive power.

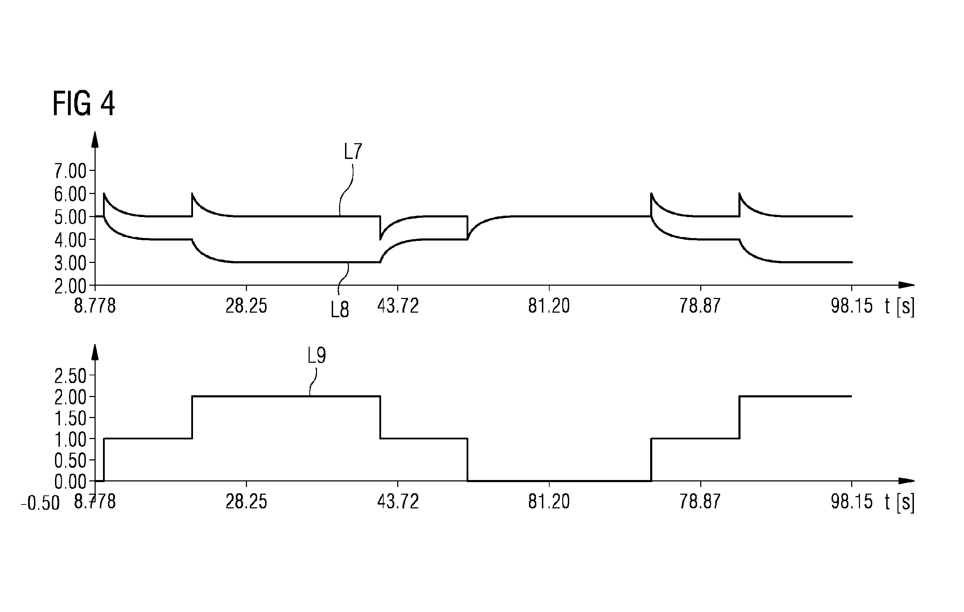

Fig. 4 shows waveforms of a second transient simulation of a wind park controlled by the inventive method. The second transient simulation illustrates a case where the reactive power flow has to track a requested reactive power. In the example of Fig. 4 the requested reactive power is 5 MVAr. As can be seen from waveform L7, the total reactive power provided by the wind park tracks the requested reactive power of 5 MVAr. Spikes in the waveform are caused by the switching action of the reactor means having the total shunt capacitance illustrated by waveform L9. As before, the summed reactive power provided by the wind turbines (L8) decreases when the reactor means deliver more reactive power.

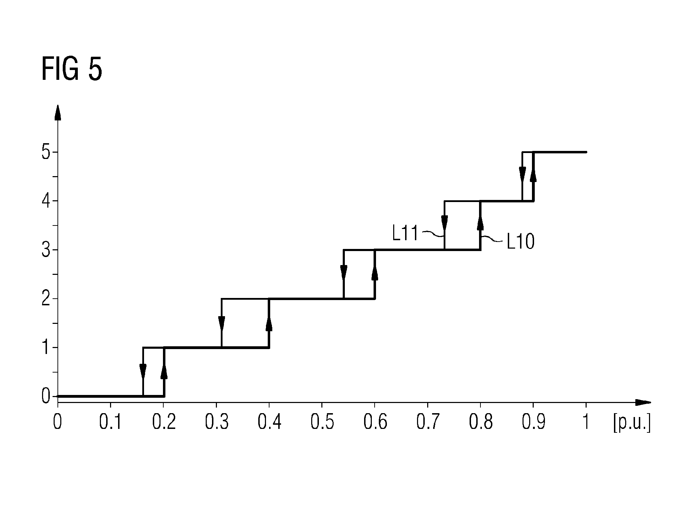

Fig. 5 shows a diagram illustrating thresholds for engaging and disengaging capacitors of the capacitor bank. The diagram shows the number of capacitors in operation as a function of the active power output of the wind park. In accordance with Fig. 5 some embodiments of the invention may employ a hysteresis functionality where the thresholds at which an additional capacitor will be put into operation (waveform L10) will differ from the respective thresholds at which the capacitor will be put out of service again (waveform L11). For example, the first capacitor may be put into service when the active power output rises to or above 0.2 p.u. (per unit) but will be put out of service when the active power output has dropped to or below 0.16 p.u. Preferably the thresholds for engaging a specific capacitor will be higher than the corresponding one for disengaging the capacitor. This has an advantage in that the number of switching operations due to a varying active power output of the wind park will decrease.

In the specific example of Fig. 5 a maximum number of capacitors is chosen to be five, however, any other number of capacitors could be used. In addition, the differences between both thresholds associated with a specific number of capacitors can vary as a function of the active power output. For example, the difference can be lower for very low or very high active power outputs (e.g. active power outputs lower than 0.3 p.u. or higher than 0.7 p.u.) than for intermediate active power outputs.

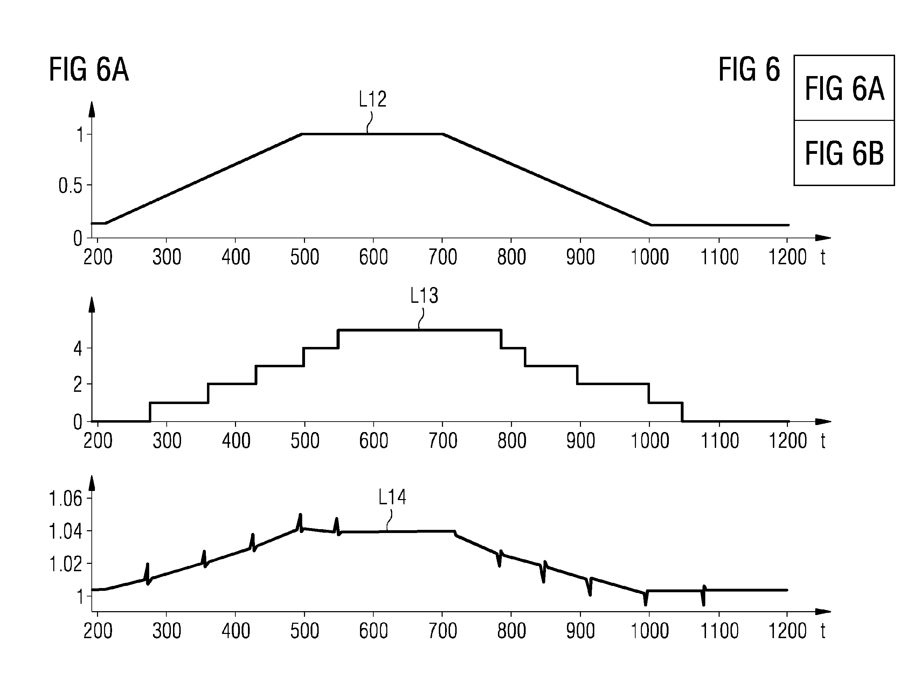

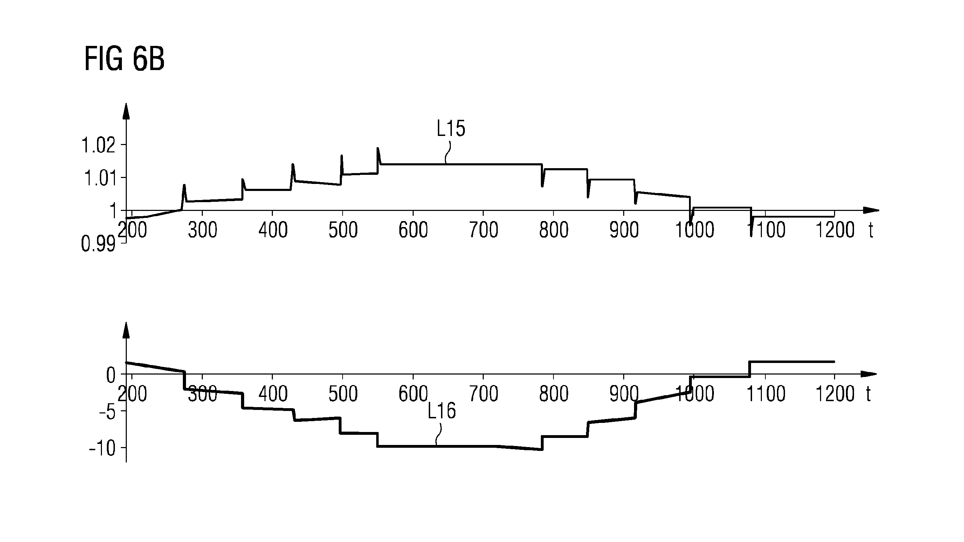

Fig. 6 shows waveforms of a third transient simulation of a wind park controlled by the inventive method employing the thresholds of Fig. 5. For the simulation the size of each capacitor was set to 3 MVAr and the active power reference was ramped up from 0.11 p.u. to 1.0 p.u., i.e. the nominal power of the wind park, and back down to 0.11 p.u. (waveform L12). As a result of the changing active power reference the number of capacitors in service changes with the active power output of the wind park employing the thresholds illustrated by Fig. 5 (waveform L13). Waveform L14 in the third subdiagram shows the reference set points sent to the wind turbines as a result of the changing active power reference. Again a disturbance can be seen in the waveform for each switching operation of the capacitor bank where the controller determining the set points for the wind turbines reacts to the disturbances in the measured voltage at the PCC (waveform L15) and tries to stabilise the voltage by distributing modified set points to the wind turbines. The fifth subdiagram shows the resultant total reactive power provided to the utility grid (waveform L16). As can be seen from the illustration, a wind park employing reactor means and the method of the invention can provide a significant amount of reactive power to the utility grid. In the exemplary embodiment of Figs. 5 and 6 a maximum of more than 10 MVAr reactive power is provided.

Even though the invention has been described referring to illustrative embodiments, the invention is not limited to the described exemplary embodiments. A person skilled in the art will be able to derive variations without leaving the scope of the invention as defined by the appendant claims.

## Claims

1. A method of controlling the dynamic power factor or the reactive power output of a wind park to a utility grid which is to be driven with a requested power factor, a requested voltage or a requested reactive power, the wind park comprising a plurality of wind turbines (1, 3) and reactor means (83) connected to a common connection point (29) of the wind turbines (1, 3) and adapted to provide a selectable shunt capacitance in accordance with a capacitor selection signal, the method being executed by a wind park controller (43) of the wind park and including:
a) determining a set point for the wind turbines (1, 3) in accordance with a requested power factor, a requested voltage or a requested reactive power, wherein the set point may be a power factor set point or a voltage set point for setting a reactive power output of the wind turbines (1, 3); and
b) transmitting the set point to the wind turbines (1, 3), **characterised in that** the method further includes:
c) comparing the determined set point to a first threshold set point; and
d) adjusting the capacitor selection signal in accordance with a result of the comparison.

2. The method of the preceding claim, wherein step c) further includes
cc) comparing the determined set point to a second threshold set point.

3. The method of the preceding claim, wherein the first threshold set point is an upper threshold set point and the second set point is a lower threshold set point and the capacitor selection signal is adjusted when the determined set point exceeds the first threshold set point or is lower than the second set point.

4. The method of one of the preceding claims, wherein the comparison is carried out repetitively or continuously and wherein the capacitor selection signal is only adjusted if the result of the comparison has been constant during a first predetermined time period.

5. The method of the two preceding claims, wherein the capacitor selection signal is adjusted if the determined set point has exceeded the upper threshold set point during a second predetermined time period or has been lower than the lower threshold set point during a third predetermined time period.

6. The method of the preceding claim, wherein the second predetermined time period is different from the third predetermined time period.

7. The method of one of the preceding claims, wherein the capacitor selection signal is held constant during a fourth predetermined time period after the capacitor selection signal has been adjusted.

8. The method of one of the preceding claims, wherein adjusting the capacitor selection signal includes either incrementing or decrementing the selectable shunt capacitance by a predetermined step capacitance.

9. The method of one of the claims 1 through 7, wherein step c) includes comparing the determined set point to a plurality of first threshold set points and wherein the capacitor selection signal is adjusted in accordance with a first number of first threshold set points that are lower than the determined set point and a second number of first threshold set points that are greater than the determined set point.

10. The method of one of the preceding claims, wherein determining the set point is carried out in accordance with a current state of the capacitor selection signal.

11. A data storage medium comprising program code which, when executed on a wind park controller (43) of a wind park comprising a plurality of wind turbines (1, 3) and reactor means (83) connected to a common connection point (29) of the wind turbines (1, 3) and adapted to provide a selectable shunt capacitance in accordance with a capacitor selection signal, carries out the method of one of the preceding claims.
